(19) Europäisches Patentamt
European Patent Office
Office européen des brevets

(11) **EP 2 393 281 B1**

(12) **EUROPÄISCHE PATENTSCHRIFT**

| | |
|---|---|
| (45) Veröffentlichungstag und Bekanntmachung des Hinweises auf die Patenterteilung:<br>**10.09.2014 Patentblatt 2014/37** | (51) Int Cl.:<br>***H04N 5/33*** *(2006.01)*      ***H04N 5/365*** *(2011.01)*<br>***H04N 5/243*** *(2006.01)*     ***H04N 5/202*** *(2006.01)* |

(21) Anmeldenummer: **11168431.2**

(22) Anmeldetag: **01.06.2011**

(54) **Wärmebildkamera und Verfahren zur Aufnahme und/oder Modifikation und Wiedergabe von Wärmebildern einer Szene und/oder eines Objektes**

Thermal image camera and method for holding and/or modifying and outputting thermal images of a scene and/or an object

Caméra thermique et procédé de réception et/ou de modification et de retransmission d'images thermiques d'une scène et/ou d'un objet

<table>
<tr><td>

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2010 DE 102010023170**

(43) Veröffentlichungstag der Anmeldung:
**07.12.2011 Patentblatt 2011/49**

(73) Patentinhaber: **ESW GmbH**
**22880 Wedel (DE)**

</td><td>

(72) Erfinder: **Weisbach, Frank**
**07747 Jena (DE)**

(74) Vertreter: **Oehmke, Volker**
**Patentanwälte Oehmke & Kollegen**
**Neugasse 13**
**07743 Jena (DE)**

(56) Entgegenhaltungen:
**US-A- 5 083 204**

</td></tr>
</table>

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Wärmebildkamera und ein Verfahren zur Erstellung von Wärmebildern mit einer Wärmebildkamera, wie sie gattungsgemäß in der DE 698 30 731 T2 beschrieben ist.

Thermografie nennt man ein bildgebendes Verfahren, das die für das menschliche Auge unsichtbare Wärmestrahlung (mittleres bis hin zum fernen Infrarot) eines Objektes oder Körpers sichtbar macht. Bei der Thermografie werden Temperaturverteilungen auf Flächen und Gegenständen erfasst und dargestellt. Die Thermografie ist ein berührungsloses Messverfahren.

Bilder, die von Infrarotkameras erzeugt werden, liegen zunächst in Graustufen vor. Gängige Kameramodelle sind in der Lage, bis zu 256 (8 Bit) Graustufen darzustellen. Allerdings ist es für den menschlichen Betrachter nicht möglich, derart feine Graustufungen sicher aufzulösen. Es ist daher nützlich, Bilder in Falschfarben-Darstellung zu erzeugen, wozu fast alle Wärmebildkameras in der Lage sind. Das Auge vermag Farbunterschiede besser als Helligkeitsunterschiede zu unterscheiden. Im so eingefärbten Bild wird die Intensität der Wärmestrahlung durch den Farbton repräsentiert und nicht nur durch unterschiedliche Graustufen. Für die Einfärbung der Grauwert-Bilder stehen gewöhnlich verschiedene Farbpaletten zur Verfügung. Oft wird der hellste - der wärmste - Teil des Bildes weiß, die Zwischentemperaturen in Gelb- und Rottönen und die dunklen, das heißt kälteren, Teile des Bildes in Blautönen dargestellt.

Thermografiekameras können in zwei Arten unterteilt werden: Systeme mit gekühlten Infrarotbilddetektoren und mit ungekühlten Detektoren.

Gekühlte Infrarotdetektoren bestehen meist aus einem Array von Fotoempfängern, die nach dem Prinzip des inneren fotoelektrischen Effekts arbeiten. Die Detektoren sind gewöhnlich in einem vakuumversiegelten Gehäuse untergebracht und werden kryogenisch gekühlt. Damit sind die Detektoren in der Regel viel kälter als die zu beobachtenden Objekte, wodurch sich die thermische Empfindlichkeit (Temperaturauflösung) des Thermografiesystems gegenüber den ungekühlten Systemen entscheidend erhöht. Ein Nachteil dieser Methode: Fällt die Kühlung des Detektors aus, ist das Thermografiesystem "blind". Weitere Nachteile gekühlter Systeme sind die erhöhten Anschaffungs- und Betriebskosten sowie die mitunter langen Anlaufzeiten, bis das System den Detektor auf Betriebstemperatur herunter gekühlt hat. Dem gegenüber steht die herausragende Bildqualität im Vergleich zu ungekühlten Systemen.

Ungekühlte Thermografiekameras nutzen Detektoren, die bei Umgebungstemperatur arbeiten. Alle modernen ungekühlten Systeme arbeiten nach dem Prinzip der Änderung von Widerstand, Spannung oder Stromstärke bei Aufheizung des Detektors durch die Infrarotstrahlung. Diese Änderungen werden gemessen und mit den Werten bei Betriebstemperatur verglichen. Hieraus ermittelt man die aufgenommene Strahlungsmenge und errechnet - unter Zuhilfenahme eines voreingestellten Emissionsfaktors - eine Temperatur.

Ungekühlte Infrarotsensoren werden durch thermoelektrische Peltier-Kühler (TEC) auf konstanter Temperatur gehalten, um Signaldrift der Empfängerelemente zu verringern. Es gibt auch thermisch unstabilisierte (TEC-less) Detektoren. Solche Systeme kommen ohne kostspielige, unhandliche Kühlvorrichtungen aus. Damit sind diese Thermografiesysteme deutlich kleiner und kostengünstiger als gekühlte Systeme. Sie liefern aber ein vergleichsweise schlechteres Ergebnis. Ungekühlte Detektoren verwenden pyroelektrische oder Mikrobolometerarrays.

Die Detektorzelle eines Mikrobolometerarrays besteht aus einer sogenannten Microbridge-Struktur, einem <1 $\mu$m dicken, thermisch isolierten Scheibchen, das durch 2 elektrische Kontakte über dem Substrat gehalten wird. Die Scheiben bestehen aus einem Material mit einem stark temperaturabhängigen Widerstand (zum Beispiel Vanadiumoxid). Die einfallende Infrarotstrahlung wird absorbiert und führt zu einer Temperaturerhöhung des Scheibchens, was wiederum den Widerstand ändert. Der gemessene Spannungsabfall wird als Messsignal ausgegeben. Pyroelektrische Sensoren liefern dagegen nur bei Temperaturänderung eine Spannung mit sehr hoher Quellimpedanz.

Sowohl Mikrobolometerarrays als auch pyrometrische Sensoren benötigen einen mechanischen Chopper oder zumindest eine periodische Abschattung des Bildsensors. Der Grund ist bei pyrometrischen Sensoren, dass diese nur auf Temperaturänderungen reagieren können. Bei Bolometerarrays dient der Chopper oder Shutter dazu, ein Dunkelbild zu gewinnen, welches als sensorspezifische Referenz (jedes Pixel besitzt einen individuell unterschiedlichen Widerstand!) vom aufgenommenen Bild Pixel für Pixel abgezogen wird.

Dies wird üblicherweise durch eine "Zweipunkt-Korrektur" (DE 698 30 731 T2) getan, d. h. eine Korrektur mittels eines Offsets und einer Steigung, also einer linearen Näherung. Auch die Darstellung der Bilddaten erfolgt dann in der Regel entweder unmittelbar, oder mittels einer linearen Übertragungskennlinie (mittels eines Offsets und einer Steigung).

Eine lineare Signaldarstellung erfordert allerdings einen Kompromiss zwischen Auflösung und Dynamik. Mit einer steilen Kennlinie lassen sich zwar kalte Objekte thermisch gut auflösen, hohe Objekttemperaturen führen jedoch schnell zur Übersteuerung. Umgekehrt könnte man mit einer für hohe Temperaturen optimierten flachen Kennlinie keine Details mehr erkennen.

In der US 5,083,204 A wird ein Signalprozessor zur Bildverbesserung in FLIR-Systemen beschrieben. FLIR-Systeme sind rein bildgebende Beobachtungsgeräte für den militärischen Einsatz ohne radiometrische Messfunktion. Durch eine gespeicherte Gain/Level-Übertragungsfunktion können verschiedene Bildverbesserungsmethoden realisiert werden.

Der Erfindung liegt die Aufgabe zugrunde, eine Möglichkeit aufzuzeigen, mit der eine optimale Signalauflösung mit möglichst geringem Aufwand bei niedrigen Objekttemperaturen sich erzielen lässt, ohne dass bei hohen Temperaturen eine Signalübersteuerung eintritt.

Erfindungsgemäß wird die Aufgabe gelöst durch ein Verfahren zur Aufnahme und/oder Modifikation und Wiedergabe von Wärmebildern einer Szene und/oder eines Objektes nach Anspruch 1.

Vorteilhaft ist es, wenn für jedes Pixel eine dazugehörige individuell abgestimmte nichtlineare Kennlinie zur Anwendung kommt. Sie kann aber auch für jedes Pixel gleich sein. Ferner kann die Kennlinie jedes Pixels monoton steigend oder monoton fallend, streng monoton steigend oder streng monoton fallend sein. Ferner kann die Kennlinie bei niedrigeren Eingangssignalen steiler oder flacher sein als bei höheren Eingangssignalen.

Ebenfalls vorteilhaft kann es sein, wenn der Kompressionsparameter k, der die Krümmung der Kennlinie beschreibt, bei Eingangssignalen bis zu einer Schwelle konstant ist, und oberhalb der Schwelle linear mit einer positiven Steigung verläuft. Die Steigung oberhalb der Schwelle kann zwischen mehreren Wahlmöglichkeiten umschaltbar ausgestaltet werden.

Nach Anwendung der Kennlinie kann eine Farbdarstellung gemäß einer Farbtabelle erfolgen. Die Farbtabelle kann Signale unterhalb einer unteren Schwelle mit Grauwerten, Signale zwischen der unteren Schwelle und einer oberen Schwelle in aufsteigender Reihenfolge mit den Farben Gelb, Orange und Rot und Signale oberhalb der oberen Schwelle mit der Farbe Rot belegen. Die Farbtabelle kann aber auch Signale unterhalb einer unteren Schwelle mit Grauwerten, Signale zwischen der unteren Schwelle und einer oberen Schwelle in aufsteigender Reihenfolge mit einer Anzahl bestimmter Farben mit einer festen Reihenfolge von einer niedrigsten zu einer höchsten Farbe und Signale oberhalb der oberen Schwelle mit der höchsten Farbe belegen.

Ferner wird die Aufgabe gelöst durch eine Wärmebildkamera zur Aufnahme und Wiedergabe von Wärmebildern einer Szene und/oder eines Objektes nach Anspruch 5. Vorteilhaft kann es sein, wenn für jedes Pixel eine eigene nichtlineare Kennlinie abgespeichert ist. Ferner kann die Kennlinie jedes Pixels monoton steigend oder monoton fallend, streng monoton steigend oder streng monoton fallend sein. Ferner kann bei dieser Wärmebildkamera die Kennlinie bei niedrigeren Eingangssignalen steiler oder flacher sein als bei höheren Eingangssignalen.

Vorteilhaft kann es sich erweisen, wenn der Kompressionsparameter k, der die Krümmung der Kennlinie beschreibt, bei Eingangssignalen bis zu einer Schwelle konstant ist und oberhalb der Schwelle linear mit einer positiven Steigung ausgebildet ist. Die Steigung kann oberhalb der Schwelle im Betrieb der Wärmebildkamera zwischen mehreren Wahlmöglichkeiten umschaltbar ausgestaltet sein.

Bei der erfindungsgemäßen Wärmebildkamera kann nach Anwendung der Kennlinie eine Farbdarstellung gemäß einer Farbtabelle erfolgen. Die Farbtabelle kann Signale unterhalb einer unteren Schwelle mit Grauwerten, Signale zwischen der unteren Schwelle und einer oberen Schwelle in aufsteigender Reihenfolge mit den Farben Gelb, Orange und Rot und Signale oberhalb der oberen Schwelle mit der Farbe Rot belegen. Die Farbtabelle kann auch Signale unterhalb einer unteren Schwelle mit Grauwerten, Signale zwischen der unteren Schwelle und einer oberen Schwelle in aufsteigender Reihenfolge mit einer Anzahl bestimmter Farben mit einer festen Reihenfolge von einer niedrigsten zu einer höchsten Farbe und Signale oberhalb der oberen Schwelle mit der höchsten Farbe belegen.

Für die Anzahl der Farben kann die Zahl acht gewählt werden.

In dieser Anmeldung soll unter "pixelbasiert" verstanden werden, dass das Bild mit einer bestimmten Anzahl und Anordnung von Positionen diskret ist, an welchen Bildintensitäten gemessen werden. Dies ist üblicherweise eine Zeilen-Spalten-Matrixstruktur, müsste dies aber an sich nicht sein. Die hier dargestellten Verfahren setzen nicht per se eine Matrixstruktur voraus, sondern bleiben auch bei einer anderen Anordnung der Pixel gültig. Wichtig ist lediglich, dass die Anordnung gleich bleibt, wenn verschiedene Bilder miteinander verrechnet werden sollen, wie beispielsweise das Dunkelbild, welches als sensorspezifische Referenz bei geschlossenem Shutter gewonnen wird, vom aufgenommenen Wärmebild Pixel für Pixel abgezogen wird. Pixelbasiert bedeutet dann, dass die entsprechende Berechnung für jede Pixelposition erfolgt. Parameter wie Empfindlichkeits-Charakteristiken etc. können dann im allgemeinen Fall von Pixelposition zu Pixelposition variieren, sie müssen nicht für das ganze Bild gleich sein.

Unter "Kennlinie" wird hier eine mathematische Funktion f(x) verstanden, welche einem Eingangssignal eindeutig ein Ausgangssignal zuordnet.

Sie kann im mathematischen Sinn (streng) monoton steigend oder fallend sein.

Die Erfindung soll nachstehend anhand von Ausführungsbeispielen näher erläutert werden.

Es zeigen die dazugehörigen Zeichnungen:

Fig. 1    schematische Darstellung einer erfindungsgemäßen Wärmebildkamera

Fig. 2    Ablaufschema des erfindungsgemäßen Verfahrens

Fig. 3    eine spezielle nichtlineare Kennliniendarstellung

Fig.4    drei Verläufe für den das Ausmaß der Dynamikkompression bestimmenden Parameter

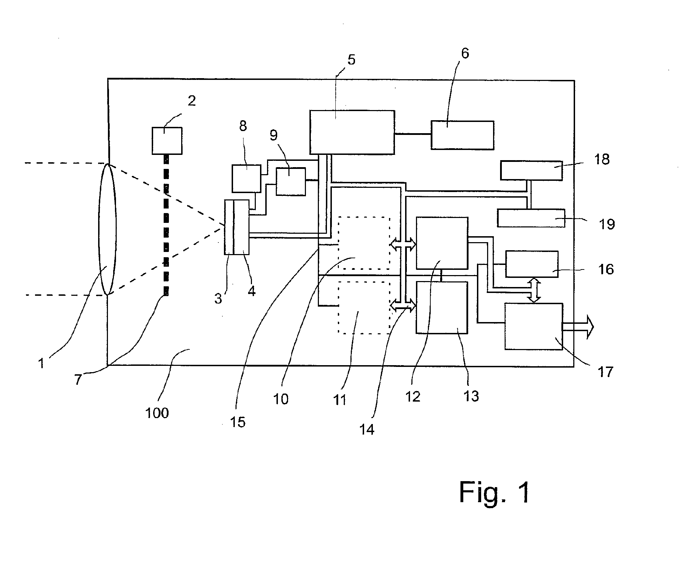

Fig. 1 zeigt eine Wärmebildkamera 100 mit seinen wesentlichen Komponenten der IR-Optik 1, der Shuttersteuervorrichtung 2, dem Mikrobolometer-FPA ("focal plane array") 3, der Ausleseeinheit 4 und der Prozessoreinheit 5.

Die IR-Optik 1 projiziert ein Infrarotbild auf das Mikrobolometer-FPA ("focal plane array") 3, wobei die Mikrobolometer im Allgemeinen matrixförmig angeordnet sind. Wie bereits oben erwähnt, sind jedoch auch andere Anordnungsprinzipien denkbar. Die Prozessoreinheit 5 steuert in einem von der Taktsteuerung 6 vorgegebenem Takt das Mikrobolometer-FPA 3 zur Aufnahme von Frames dementsprechend an. Ferner steuert die Prozessoreinheit 5 in einem als einstellbarer Parameter vorgegebenen Shuttertakt die Shuttersteuervorrichtung 2 dazu an, den Shutter 7 in den Strahlengang ein- oder auszuschwenken, so dass in einer bestimmten Reihenfolge im Wechsel Dunkelbilder und Wärmebilder erzeugt werden.

Wird der Shutter 7 eingeschwenkt, dann bedeutet dies, dass der Strahlengang unterbrochen ist und das Mikrobolometer-FPA 3 nur von Störquellen herrührende Strahlung empfängt und nicht mehr die Strahlung des abzubildenden Objektes. Bei geschlossenem Shutter 7 wird ein Dunkelbild des Shutters 7 als Referenz erzeugt, welches zur Kompensation von Inhomogenitäten der einzelnen Mikrobolometer-Bauelemente verwendet wird ("Non-Uniformity-Correction" NUC). Im ausgeschwenkten Zustand hingegen wird das Mikrobolometer-FPA 3 über die IR-Optik 1 mit der vom abzubildenden Objekt herrührenden Strahlung beaufschlagt.

Die Prozessoreinheit 5 steuert ferner über einen Bias-Vorspannungs-Erzeuger 8 die Bias-Vorspannung der Ausleseeinheit 4 oder über eine Integrationszeit-Vorgabe-Einheit 9 die Integrationszeit der Ausleseeinheit 4 an.

Gemäß Fig. 1 sind weiterhin ein Zwischenspeicher 10 für ein aufgenommenes Wärmebildframe, ein Zwischenspeicher 11 für ein Dunkelbildframe, ein Zwischenspeicher 12 für das korrigierte Wärmebild und ein Zwischenspeicher 13 für das Dunkelbild dargestellt, welche der Korrektur dienen.

Es sei hierbei angemerkt, dass der Zwischenspeicher 10 für ein aufgenommenes Wärmebildframe und der Zwischenspeicher 11 für das Dunkelbildframe nicht unbedingt erforderlich sind. Sie sind daher in Fig. 1 nur gestrichelt gezeichnet. Auf eine Zwischenspeicherung von Wärmebild- und Dunkelbildframe kann verzichtet werden, wenn diese direkt als Datenstrom weiterverrechnet werden, was durchaus vorteilhaft ist, denn eine Zwischenspeicherung wäre bei den hohen Datenraten zeitkritisch und teuer.

Wie unten noch erläutert werden wird, kann die Korrektur mit einer nichtlinearen Kennlinie je nach Ausführungsform vor oder nach einer Dunkelbildkorrektur erfolgen. Sie kann diese ergänzen, oder eventuell auch ganz ersetzen.

IR-Sensoren, wie Mikrobolometer-FPA 3, liefern in der Regel kein Temperaturlineares Ausgangssignal, sondern ein zur Strahlungsenergie proportionales Signal. Eine zum Ausgangssignal lineare Darstellung würde daher die Temperaturdarstellung stark verzerren. Durch die nichtlineare Kennlinie wird in bestimmten Ausführungsformen eine lineare Temperaturdarstellung erreicht.

Ein Bilddatenbus 14 verbindet die Prozessoreinheit 5 mit sämtlichen Zwischenspeicher 10, 11, 12, 13 zum Transfer der Bilddaten. Gemäß Fig. 1 ist die Prozessoreinheit 5 ferner über Steuer- und Adressleitungen 15 mit den Zwischenspeichern 10, 11, 12, 13 verbunden, die jeweils ebenfalls Busstruktur aufweisen können.

Die Prozessoreinheit 5 kann über diese Busstrukturen die Bilddaten hereinladen, um sie zu bearbeiten oder abzuspeichern. Die bearbeiteten Bilddaten können anschließend über eine Anzeigeeinheit 16 dem Benutzer angezeigt oder über eine Computerschnittstelle 17 zu einem nicht dargestellten externen Rechner ausgegeben werden.

Die Prozessoreinheit 5 kann ferner sowohl lesend als auch schreibend auf einen Zwischenspeicher 18 für den Gain und auf einen Zwischenspeicher 19 für den Offset zugreifen. Mit diesen Zwischenspeichern 18, 19 für Gain und Offset sind entweder Speicher für Einzelwerte gemeint, falls Gain und Offset als einzelne skalare Werte vorgegeben sind. Es kann aber auch mit diesen Zwischenspeichern 18, 19 für Gain und Offset jeweils eine komplette Matrix gemeint sein, falls Gain und Offset für jede Pixelposition einzeln vorgegeben sind. Gain und Offset dienen insbesondere der Zweipunkt-Korrektur. Diese kann pixelweise erfolgen oder einheitlich für alle Pixelpositionen gleich. Die Werte bzw. -matrizen für Gain und Offset werden üblicherweise als werkseitige Kalibration fest vorgegeben. Es sei aber angemerkt, dass auch Betriebsarten denkbar sind, in denen sie zur Laufzeit festgelegt werden.

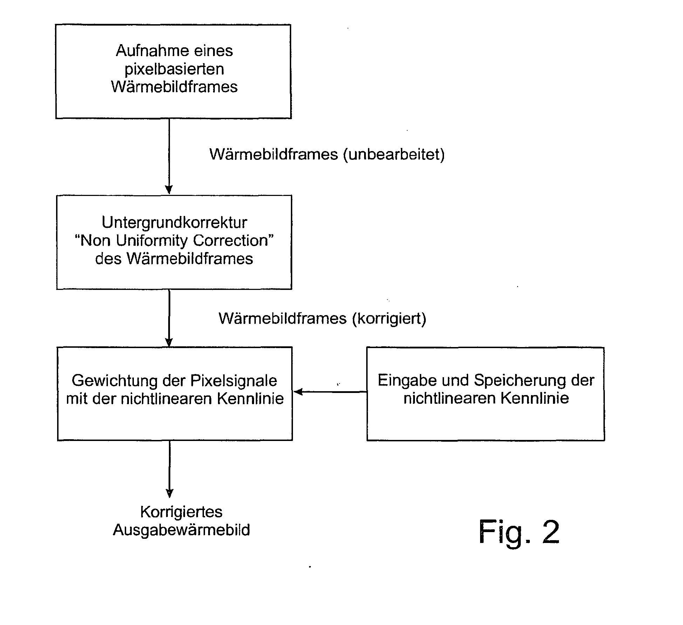

Fig. 2 zeigt ein Flussdiagramm des erfindungsgemäßen Verfahrens. Mittels einer Wärmebildkamera 100, welche eine pixelbasierte Detektoreinheit und eine Prozessoreinheit 5 umfasst, wird zuerst ein pixelbasiertes Wärmebildframe aufgenommen.

In der vorliegenden Ausführungsform des Verfahrens wird hierzu ein Mikrobolometer-FPA 3 eingesetzt. Es sei hier aber angemerkt, dass das erfindungsgemäße Verfahren nicht auf ein Mikrobolometer-Bauelement beschränkt sein muss. Es kann für mittels Mikrobolometer-Bauelementen gewonnene Wärmebilder eingesetzt werden, es kann aber auch auf mittels anderer Sensoren, wie CCD-Sensoren oder CMOS-Sensoren gewonnene Wärmebilder eingesetzt werden.

Bei einem Mikrobolometer-Bauelement wird das rohe Wärmebildframe üblicherweise anschließend einer als "Nicht-Uniformitäts-Korrektur" oder "Non-Uniformity-Correction", NUC, bezeichneten Dunkelbildkorrektur unterworfen, um uneinheitliche Sensitivitäten der einzelnen Pixelsignale auszugleichen. Nach der NUC erhält man ein NUC-korrigiertes Wärmebildframe. Anschließend werden die Pixelsignale dieses NUC-korrigierten Wärmebildframes mit ihrer jeweiligen nichtlinearen Kennlinie gewichtet, welche vor der Bildaufnahme, üblicherweise im Rahmen eines Kalibriervorganges, für jede Pixelposition eingegeben und gespeichert worden sind. Das Ergebnis ist ein korrigiertes Ausgabebild, welches auf einer Anzeigeeinheit 10 der Wärmebildkamera 100 dargestellt oder über eine Computerschnittstelle 17 an einen externen Rechner ausgegeben wird.

Das Bildsignal liegt pixelbasiert vor. Es wird in der Praxis häufig ausreichen, nur eine nichtlineare Kennlinie zu verwenden, welche für alle Pixel eingesetzt wird. Hierdurch würde Speicherplatz und Prozessor-Rechenleistung gespart, und die Wärmebildkamera 100 damit kostengünstiger in der Herstellung. Es kann allerdings auch sinnvoll sein, für jedes Pixel seine eigene nichtlineare Kennlinie vorzuhalten, welche von der nichtlinearen Kennlinie der anderen Pixel abweichen kann und in der Regel auch wird. Auch ist es nicht notwendig, zuerst die Nicht-Uniformitäts-Korrektur auszuführen und erst anschließend die Korrektur mit den nichtlinearen Kennlinien auszuführen. Wird für jedes Pixel eine eigene nichtlineare Kennlinie verwendet, so ist es über die Variation dieser nichtlinearen Kennlinien eventuell durchaus möglich und sinnvoll, auch die NUC gleich mit auszukorrigieren, so dass die Korrektur mit der/den nichtlineare(n) Kennlinie(n) direkt auf das rohe Wärmebildframe angewendet wird.

Es kann in speziellen Ausführungsformen der Erfindung eine Farbpalette beispielsweise so gewählt werden, dass ein bestimmter Temperaturbereich von Gelb über Orange nach Rot durchgestimmt wird. Hierbei werden dann im allgemeinen Temperaturen oberhalb dieses Temperaturbereiches einheitlich als Rot, und Temperaturen unterhalb dieses Temperaturbereiches als Grauwerte dargestellt.

Ein Beispiel ist bei einer Gesamtdynamik von 65.536 Rohwerten der Bereich 110°C(Gelb) über 120°C (Orange) zu ≥130°C (Rot). Ein weiteres Beispiel ist der Bereich 300°C (Gelb) über 600°C (Orange) zu ≥900°C (Rot). Noch ein weiteres Beispiel ist die Unterteilung des Bereiches von 300°C bis ≥1000°C in 8 Farben statt drei.

Das zweistufige Vorgehen ermöglicht es beispielsweise auch, die Farbdarstellung der zweiten Stufe auf dem externen Rechner vorzunehmen.

Es sind in speziellen Ausführungsformen der Erfindung insbesondere Kennlinien interessant, die monoton, und zusätzlich entweder konvex oder konkav im Gesamtintervall sind. In Sonderfällen können auch monotone Funktionen sinnvoll sein, die nicht im gesamten Intervall konvex oder konkav sind.

Der Grund für die Forderung der Monotonie ist, dass sie die Kennlinie als mathematische Funktion umkehrbar werden lässt, d. h. aus dem Wertebereich (im Display dargestellte Bildintensität) lässt sich eindeutig auf den Argumentebereich (zugrundeliegende Temperaturverteilung) zurückschließen, d. h. das Bild ist zwar bewusst nichtlinear, und soll es auch sein, um die Dynamik zu beschränken und stark unterschiedliche Temperaturbereiche trotzdem detailgetreu darstellen zu können, aber es bleibt trotzdem interpretierbar, d.h. der Anwender kann durch Betrachten des Bildes höhere und niedrigere Temperaturen trotzdem jederzeit klar voneinander unterscheiden.

Eine konkave Kennlinie bewirkt darüber hinaus, dass im Vergleich zur linearen Übertragung die Detailtreue bei niedrigen Intensitäten angehoben wird, während gleichzeitig bei hohen Intensitäten durch die hier größere Abflachung der Kennlinie ein Übersteuern vermieden wird. Dies ist in Anwendungen besonders sinnvoll, in welchen sehr unterschiedliche Temperaturbereiche vorliegen, die aber jeweils trotzdem mit adäquater Detailtreue in einem gemeinsamen Bild vertreten sein sollen.

Umgekehrt bewirkt eine konvexe Kennlinie im Vergleich zur linearen Übertragung ein Anheben der Sensitivität bei höheren Intensitäten und ein Abflachen bei niedrigen Intensitäten. Dies kann in Anwendungen sinnvoll sein, in welchen beispielsweise nur bei höherer Intensität die Detailtreue angehoben werden soll, ohne dass ein Übersteuern zu befürchten wäre. Auch für Anwendungen, bei welchen beispielsweise zur Vorbereitung von Mustererkennungsschritten anhand einer Schwelle zwischen zwei verschiedenen Intensitätsbereichen klarer unterschieden werden kann, als eine lineare Übertragung es erlaubt, kann eine konvexe Kennlinie sinnvoll sein.

Wird für jedes Pixel eine eigene Kennlinie vorgesehen, so ist es in der Regel sinnvoll, dass die Monotonie-Eigenschaft und/oder Konkavitäts-/Konvexitäts-Eigenschaft bei allen Pixeln einheitlich ist. Auch dies ist an sich nicht zwingend, in der Praxis aber häufig hilfreich, um die Interpretation der Bilder zu erleichtern.

So kann es in einer Ausführungsform der Erfindung beispielsweise sinnvoll sein, dass zwar alle Kennlinien konkav sind, um insgesamt eine Dynamikreduktion der Abbildung zu erreichen, allerdings alle mit unterschiedlichen Kennlinien, deren Auslegung derart vorgenommen wird, dass nach einer als Zweipunktkorrektur vorgenommenen Nicht-Uniformitäts-Korrektur NUC noch verbleibende Nicht-Uniformitäts-Reste durch die Variation zwischen den Kennlinien der einzelnen Pixel mit ausgeglichen wird.

Es könnte in einzelnen Ausführungsformen auch sinnvoll sein, beispielsweise am Bildrand eine andere Kennlinie zu verwenden als in der Bildmitte, wenn die Kamera für Kontrollaufgaben eingesetzt werden soll, bei welchen sich die zu erwartende Intensitätsverteilung zwischen Bildmitte und Bildrand deutlich unterscheidet.

In ähnlicher Weise könnte es in einzelnen Ausführungsformen sinnvoll sein, beispielsweise im oberen Bildbereich eine andere Kennlinie zu verwenden als im unteren, falls die zu erwartende Intensitätsverteilung oben und unten unterschiedlich ist. Selbstverständlich sind noch viele weitere Anwendungen denkbar, die eine örtliche Variation der Kennlinie für spezielle Anwendungen sinnvoll erscheinen lassen.

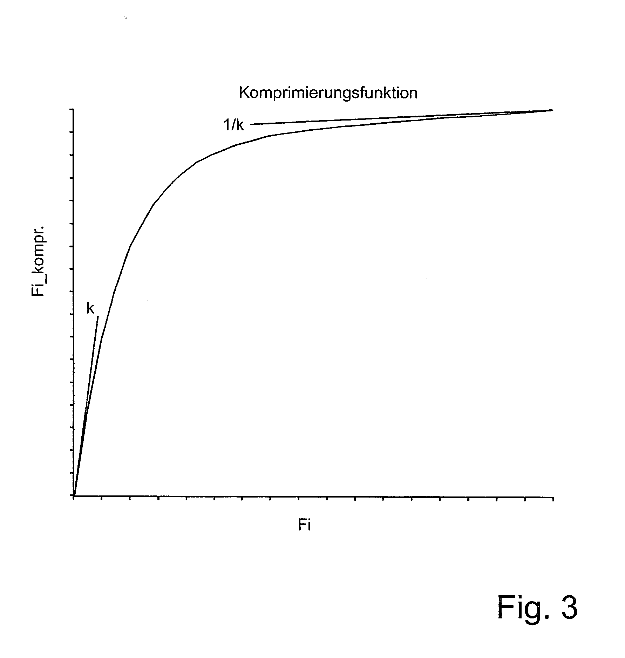

Fig. 3 zeigt für eine Ausführungsform der Erfindung eine besondere Wahl der Kennlinie, welche gemäß der Formel

$$S_{aus} = \frac{S_{max}}{1+\dfrac{1}{k}-e^{-k}} \cdot \left(1+\frac{S_{ein}}{S_{max}\cdot k}-e^{-\frac{k\cdot S_{ein}}{S_{max}}}\right)$$

berechnet ist. Hierbei ist

$S_{min}$ die minimale Signalintensität
$S_{max}$ die maximale Signalintensität
$S_{ein}$ die Eingangssignalintensität
$S_{aus}$ die Ausgangssignalintensität
k ein Kompressionsparameter (sinnvolle Werte: 0,1...10)

In diskretisierter Form für 8-Bit-Zahlendarstellung ($S_{max}= 255$) lautet die Formel

$$Fi\_kompr. = Runden\left(\frac{255}{1+\dfrac{1}{k}-e^{-k}} \cdot \left(1+\frac{Fi}{255\cdot k}-e^{-\frac{k\cdot Fi}{255}}\right)\right)$$

Fi Farbindex
k Kompressionsparameter (sinnvolle Werte: 0,1...10)

Diese Wahl der Kennlinie bringt es mit sich, dass die Kurve bei der minimalen Signalintensität $S_{min}$, beispielsweise dem minimalen Farbindex Fi = 0, näherungsweise mit einer Steigung k startet, und bei der maximalen Signalintensität $S_{max}$, beispielsweise dem maximalen Farbindex Fi = 255, näherungsweise mit einer Steigung 1/k endet. Das heißt, diese Steigungen sind einerseits zueinander reziprok, so dass bei niedrigen Farbindizes ein möglichst hoher Detailreichtum, und gleichzeitig bei hohen Farbindizes eine weitgehende Dynamikreduktion zur Vermeidung einer Übersteuerung erreicht wird.

Diese Kennlinie weist aber beipsielsweise im Vergleich zu einer Logarithmusfunktion, welche einerseits bei Fi = 0 extrem steil, andererseits im oberen Farbindexbereich extrem flach wird, trotzdem im gesamten Argumentbereich eine endliche und beschränkte Steigung auf. Diese Steigung ist zudem durch den Parameter k parametrisierbar, d. h. die "Stärke der Nichtlinearität" der Kennlinie lässt sich durch diesen Parameter gezielt einstellen.

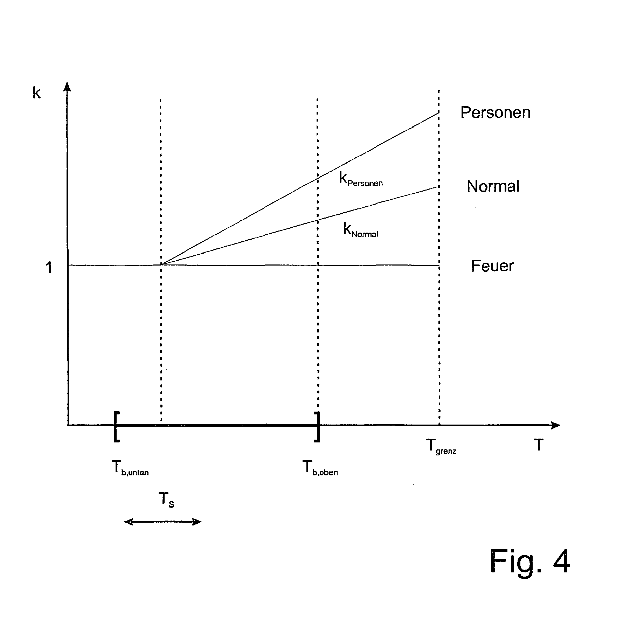

In Fig. 4 sind hierfür drei Verläufe für den das Ausmaß der Dynamikkompression bestimmenden Parameter k gezeigt.

Die k-Kurven in Fig. 4 verlaufen bei niedrigen Temperaturen bis zu einer Schwelltemperatur $T_S$ horizontal, und anschließend bis zu einer Grenztemperatur $T_{Grenz}$, beispielsweise der höchsten darstellbaren Temperatur der Wärmebildkamera 100, dann linear mit einer als Parameter einstellbaren Steigung, welche unterschiedlich gewählt wird, je nachdem ob der Kontrastverlauf auf die Darstellung von Personen abgestimmt ist, wobei die Steigung oberhalb der Schwelltemperatur $T_S$ groß gewählt wird, um bei niedrigen Temperaturen genug Details erkennen zu können, oder auf die Darstellung von Feuer, wobei die Steigung flach, oder sogar bis zu Null betragen kann, um bei hohen Temperaturen möglichst wenig zu übersteuern. Eine normale Szenerie erhält eine dazwischen liegende mittlere Steigung.

Das Zusammenwirken beider Diagramme ist dann beispielsweise so, dass die Wärmebildkamera 100 zuerst automatisch einen Temperaturbereich der dargestellten Szenerie bestimmt. Dieser hat eine untere Bereichstemperatur $T_{B,unten}$ und eine obere Bereichstemperatur $T_{B,oben}$ .

Ferner gibt der Anwender, z.B. durch eine Menüauswahl vor, ob der Kontrastverlauf zur Darstellung von Personen, Feuer oder normaler Szenerie zwischen diesen Extremen optimiert werden soll. Hierdurch wird einer der Zweige der verzweigten Geradenschar in Fig. 4 ausgewählt. Die obere Bereichstemperatur $T_{B,oben}$ bestimmt dann, welcher k-Wert letztendlich zur Anwendung kommt. Zur Darstellung von Personen der in Fig. 4 mit einem Kreis markierte $k_{Personen}$, zur Darstellung normaler Szenerie $k_{Normal}$. Der ausgewählte k-Wert bestimmt dann in der Kurve von Fig. 3 die Krümmung, d. h. der gesamte Kontrastverlauf wird dann durch ihn bestimmt, für alle darstellbaren Temperaturen.

Bei starker Krümmung (großer k-Wert) ist z. B. der Kontrast im unteren Temperaturbereich deutlich größer als im oberen (gut für Personensuche). Gibt es in der Objektszene keine Temperaturen über $T_S$, ist k = 1, d. h. der Kontrastverlauf ist näherungsweise linear. Mit zunehmender Temperatur muss ein immer größeres Temperaturintervall dargestellt werden und die Kontrastauflösung würde sinken. Bei Temperaturen über $T_S$ nimmt k zur Darstellung von Personen jedoch Werte >1 an. Durch die gekrümmte Fi-Kennlinie wird der Kontrast kalter Objekte (zu Lasten warmer) wieder angehoben.

Die Schwelltemperatur $T_S$ kann hierbei beispielsweise 50°C betragen. Sie ist allerdings ein einstellbarer Parameter und kann je nach Anwendung variiert werden. Typische Anwendungen sind die Suche nach einerseits gefährdeten Personen und andererseits Brandherden bei der Feuerbekämpfung durch die Feuerwehr. Weitere Anwendungen liegen in der Darstellung ungewöhnlicher Temperaturen in der industriellen Fertigung, beispielsweise beim Test von Elektronik-Komponenten, Abwärme von mechanischen Baugruppen oder Häusern o.ä..

Unabhängig von der Ausführungsform kann die Kennlinie entweder synthetisch vorgegeben (z. B. die Fi-Kennlinie gemäß Fig. 3) oder im Rahmen der Kalibration der Wärmebildkamera festgelegt werden.

Üblicherweise wird in einer dem Fachmann bekannten Weise eine NUC-Kalibrierung als Zweipunktkorrektur und eine Temperaturkalibrierung durchgeführt. Die Kennlinie kann dann für alle Pixel gleich gewählt werden. Die Kennlinien müssen allerdings andererseits nicht für alle Pixel gleich sein. Die Verwendung von nicht für alle Pixel gleichen Kennlinien, die aber eine gemeinsame mathematische Eigenschaft "monoton", "konvex" oder "konkav" aufweisen, kann einerseits eine NUC-Kalibrierung und/oder eine Temperaturkalibrierung auch ersetzen, andererseits aber eine Reduktion der Intensitätsdynamik und damit verbesserter Detailtreue der Abbildung bei hohen und niedrigen Temperaturen bewirken.

Die Umkehrbarkeit und Eindeutigkeit der Kennlinie wird bei vielen erfindungsgemäßen Ausführungen eingesetzt. Sie ermöglicht es beispielsweise, aufgrund einer bestimmten Farbe oder einer bestimmten dargestellten Bildintensität im auf dem Display dargestellten Wärmebild auf eine bestimmte Farbe im Objektraum zurückzuschließen. Auch intern wird in der Wärmebildkamera 100 die Umkehrbarkeit und Eindeutigkeit der Kennlinie eingesetzt, beispielsweise zur Festlegung, für welchen Farbindex welche Signalintensität bzw. welcher Signalintensitätsbereich benötigt wird. Die Kennlinien werden daher in der Regel für beide Richtungen abgelegt und verwendet.

Andererseits wird aber auch in bestimmten Ausführungsformen bewusst auf die Umkehrbarkeit verzichtet, um andere Ziele zu erreichen, bei welchen die Umkehrbarkeit nicht erforderlich ist oder sogar stört. Beispielsweise kann in einer Ausführungsform der Erfindung die Kennlinie ein periodisches Profil haben, beispielsweise einen sich periodisch wiederholenden Sägezahn. Mit einer solchen Kennlinie lässt sich dann, ähnlich den Höhenlinien auf einer Landkarte, sehr anschaulich die lokale räumliche Änderung der Signalintensität visuell darstellen, nämlich durch die Dichte der mit Höhenlinien vergleichbaren Streifen oder Bereichen gleicher Farbe bzw. Bildintensität.

Bezugszeichenliste

| | |
|---|---|
| 1 | IR-Optik |
| 2 | Shuttersteuervorrichtung |
| 3 | Mikrobolometer-FPA |
| 4 | Ausleseeinheit |
| 5 | Prozessoreinheit |
| 6 | Taktsteuerung |
| 7 | Shutter |
| 8 | Bias-Vorspannungs-Erzeuger |
| 9 | Integrationszeit-Vorgabe-Einheit |
| 10 | Zwischenspeicher |
| 11 | Zwischenspeicher |
| 12 | Zwischenspeicher |
| 13 | Zwischenspeicher |
| 14 | Bilddatenbus |
| 15 | Steuer- und Adressleitungen |
| 16 | Anzeigeeinheit |
| 17 | Computerschnittstelle |
| 18 | Zwischenspeicher |
| 19 | Zwischenspeicher |
| 100 | Wärmebildkamera |

**Patentansprüche**

**1.** Verfahren zur Aufnahme und/oder Modifikation und Wiedergabe von Wärmebildern einer Szene und/oder eines Objektes, die folgenden Schritte umfassend:

a) Erstellung mittels einer IR-Optik (1) und einer pixelbasierten Detektoreinheit oder Übernahme von einer externen Quelle eines pixelbasierten Wärmebildframes,

b) Erstellung eines Dunkelbildes,

c) Durchführung einer Non-Uniformity-Correction (NUC) mittels des Dunkelbildes, um Inhomogenitäten zu eliminieren, die vom Detektor und/oder Störquellen im optischen Strahlengang herrühren,

d) Korrektur des vorliegenden pixelbasierten Wärmebildframes durch Gewichtung der einzelnen Pixelsignale mit einer zuvor erzeugten und gespeicherten nichtlinearen Kennlinie zu Generierung eines korrigierten Ausgabewärmebildes, wobei die nichtlineare Kennlinie gemäß der Formel

$$S_{aus} = \frac{S_{\max}}{1 + \frac{1}{k} - e^{-k}} \cdot \left( 1 + \frac{S_{ein}}{S_{\max} \cdot k} - e^{-\frac{k \cdot S_{ein}}{S_{\max}}} \right)$$

berechnet wird, wobei

$S_{min}$ die minimale Signalintensität,
$S_{max}$ die maximale Signalintensität,
$S_{ein}$ die Eingangssignalintensität,
$S_{aus}$ die Ausgangssignalintensität und
k ein Kompressionsparameter zwischen 0,1 und 10 liegend ist und

e) abschließende Bereitstellung des korrigierten Ausgabewärmebildes an eine Anzeigeeinheit oder an eine Schnittstelle für externe Geräte.

2. Verfahren nach Anspruch 1, **dadurch gekennzeichnet, dass** zu jedem Pixel eine zugehörige nichtlineare Kennlinie erzeugt und gespeichert wird.

3. Verfahren nach Anspruch 1, **dadurch gekennzeichnet, dass** in diskretisierter Form für eine 8-Bit-Zahlendarstellung ($S_{max}$ = 255) die Formel lautet:

$$Fi\_kompr. = Runden\left( \frac{255}{1 + \frac{1}{k} - e^{-k}} \cdot \left( 1 + \frac{Fi}{255 \cdot k} - e^{-\frac{k \cdot Fi}{255}} \right) \right)$$

wobei

Fi ein Farbindex und
k der Kompressionsparameter
ist.

4. Verfahren nach Anspruch 1, **dadurch gekennzeichnet, dass** nach Anwendung der nichtlinearen Kennlinie eine Farbdarstellung gemäß einer Farbtabelle erfolgt, wobei dadurch Signale unterhalb einer unteren Schwelle mit Grauwerten, Signale zwischen der unteren Schwelle und einer oberen Schwelle in aufsteigender Reihenfolge mit den Farbstufen beginnend mit Gelb über Orange bis Rot und die Signale oberhalb der oberen Schwelle mit der Farbe Rot belegt werden.

5. Wärmebildkamera zur Aufnahme und Wiedergabe von Wärmebildern einer Szene und/oder eines Objektes, enthaltend:

- ein IR-Objektiv (1) und eine pixelbasierte Detektoreinheit zur Aufnahme eines pixelbasierten Wärmebildframes und

- eine Prozessoreinheit (5) die zur Ausführung der Schritte c) bis e) nach Ansprüchen 1 bis 3 ausgebildet ist.

6. Anordnung nach Anspruch 5, **dadurch gekennzeichnet, dass** für die Non-Uniformity-Correction ein Shutter (7) und eine Shuttersteuervorrichtung (2) vorhanden sind.

7. Anordnung nach Anspruch 5 oder 6, **dadurch gekennzeichnet, dass** die pixelbasierte Detektoreinheit ein Mikrobolometer-FPA (3) ist.

8. Anordnung nach Anspruch 7, **dadurch gekennzeichnet, dass** für jedes einzelne Mikrobolometer eine zugehörige nichtlineare Kennlinie in einem Speicher abgelegt ist.

9. Anordnung nach einem der vorhergehenden Ansprüche 5 bis 7, enthaltend eine Vorrichtung zur Farbdarstellung des korrigierten Ausgabewärmebildes mittels einer auf die Kennlinie abgestimmte und abgespeicherte Farbtabelle.

**Claims**

1. Method for recording and/or modifying and outputting thermal images of a scene and/or of an object, comprising the following steps:

   a) a pixel-based thermal image frame is generated by means of IR optics (1) and a pixel-based detector unit or is retrieved from an external source,
   b) a dark image is generated,
   c) a non-uniformity correction (NUC) is implemented by means of the dark image to eliminate non-uniformities arising from the detector and/or disturbance sources in the optical beam path,
   d) the existing pixel-based thermal image frame is corrected by weighting the individual pixel signals with a non-linear characteristic line which is generated and stored beforehand for generating a corrected output thermal image, wherein the non-linear characteristic line is calculated according to the following formula:

$$S_{out} = \frac{S_{max}}{1 + \frac{1}{k} - e^{-k}} \cdot \left( 1 + \frac{S_{in}}{S_{max} \cdot k} - e^{-\frac{k \cdot S_{in}}{S_{max}}} \right),$$

   where:

   $S_{min}$ is the minimum signal intensity,
   $S_{max}$ is the maximum signal intensity,
   Sin is the input signal intensity,
   $S_{out}$ is the output signal intensity, and
   k is a compression parameter between 0.1 and 10, and
   e) finally, the corrected output thermal image is supplied to a display unit or to an interface for external equipment.

2. Method according to claim 1, **characterized in that** an associated non-linear characteristic line is generated and stored for every pixel.

3. Method according to claim 1, **characterized in that** in discretized form for 8-bit number representation ($S_{max}$ = 255), the formula reads:

$$Fi\_compr. = rounded \left( \frac{255}{1 + \frac{1}{k} - e^{-k}} \cdot \left( 1 + \frac{Fi}{255 \cdot k} - e^{-\frac{k \cdot Fi}{255}} \right) \right),$$

   where
   Fi is a colour index, and

9

k is the compression parameter.

4. Method according to claim 1, **characterized in that** a colour display can be carried out according to a colour table after the non-linear characteristic line is applied, wherein the colour table can attach grey values to signals below a lower threshold, the colour levels starting from yellow through orange to red to signals between the lower threshold and an upper threshold in ascending order, and the colour red to signals above the upper threshold.

5. Thermal image camera for recording and outputting thermal images of a scene and/or of an object, comprising:

   - an IR objective (1) and a pixel-based detector unit for recording a pixel-based thermal image frame, and
   - a processor unit (5), formed to perform the steps c) to e) according to claims 1 to 3.

6. Arrangement according to claim 5, **characterized in that** a shutter (7) and a shutter control device (2) are provided for the non-uniformity correction.

7. Arrangement according to claim 5 or 6, **characterized in that** the pixel-based detector unit is a microbolometer FPA (3).

8. Arrangement according to claim 7, **characterized in that** an associated non-linear characteristic line is stored in a storage for each individual microbolometer.

9. Arrangement according to one of the preceding claims 5 to 7, comprising a device for the colour display of the corrected output thermal image by means of a colour table which is adjusted to the characteristic line and stored.

## Revendications

1. Procédé de réception et/ou de modification et de retransmission d'images thermiques d'une scène et/ou d'un objet, comprenant les étapes suivantes:

   a) un cadre de l'image thermique basé sur des pixels est généré au moyen d'un système optique IR (1) et une unité de détecteur basée sur des pixels ou est repris d'une source externe,
   b) une image sombre est générée,
   c) une correction de non-uniformité (NUC) est effectuée au moyen de l'image sombre pour éliminer des non-uniformités résultant du détecteur et/ou de sources de perturbation sur le trajet optique de faisceaux,
   d) le cadre de l'image thermique présent basé sur des pixels est corrigé par pondération des signaux de pixels individuels avec une caractéristique non-linéaire générée et enregistrée auparavant pour générer une image thermique de sortie corrigée, la caractéristique non-linéaire étant calculée selon la formule suivante:

   $$S_{sor} = \frac{S_{max}}{1 + \frac{1}{k} - e^{-k}} \cdot \left( 1 + \frac{S_{ent}}{S_{max} \cdot k} - e^{-\frac{k \cdot S_{ent}}{S_{max}}} \right),$$

   $S_{min}$ étant l'intensité minimale de signaux,
   $S_{max}$ étant l'intensité maximale de signaux,
   $S_{ent}$ étant l'intensité d'entrée de signaux,
   $S_{sor}$ étant l'intensité de sortie de signaux, et
   k étant un paramètre de compression entre 0,1 et 10, et
   e) finalement, l'image thermique de sortie corrigée est fournie à une unité d'affichage ou à une interface pour des périphériques externes.

2. Procédé selon la revendication 1, **caractérisé en ce qu'**une caractéristique non-linéaire associée est générée et enregistrée pour chaque pixel.

3. Procédé selon la revendication 1, **caractérisé en ce que** sous forme discrétisée pour une représentation de nombres

à 8 bit ($S_{max}$ = 255) la formule est:

$$Fi\_compr. = arrondi\left(\frac{255}{1+\dfrac{1}{k}-e^{-k}}\cdot\left(1+\frac{Fi}{255\cdot k}-e^{\frac{k\cdot Fi}{255}}\right)\right),$$

Fi étant un indice de couleurs, et
k étant le paramètre de compression.

4. Procédé selon la revendication 1, **caractérisé en ce que** les couleurs sont affichées selon une table de couleurs après que la caractéristique non-linéaire est appliquée, la table de couleurs pouvant attacher des valeurs de gris à des signaux au-dessous d'un seuil inférieur, les niveaux de couleurs commençant par le jaune en passant par l'orange au rouge à des signaux entre le seuil inférieur et un seuil supérieur par ordre croissant, et la couleur rouge à des signaux au-dessus du seuil supérieur.

5. Camera thermique de réception et de retransmission d'images thermiques d'une scène et/ou d'un objet, comprenant:

   - un objectif IR (1) et une unité de détecteur basée sur des pixels pour recevoir un cadre de l'image thermique basé sur des pixels, et
   - une unité de processeur (5), formée à exécuter les étapes c) à e) selon les revendications 1 à 3.

6. Dispositif selon la revendication 5, **caractérisé en ce qu'**un obturateur (7) et un dispositif de commande de l'obturateur (2) sont fournis pour la correction de non-uniformité.

7. Dispositif selon la revendication 5 ou 6, **caractérisé en ce que** l'unité de détecteur basée sur des pixels est un microbolomètre FPA (3).

8. Dispositif selon la revendication 7, **caractérisé en ce qu'**une caractéristique non-linéaire associée est enregistrée dans une mémoire pour chaque microbolomètre individuel.

9. Dispositif selon une des revendications précédentes 5 à 7, comprenant un dispositif pour l'affichage de couleurs de l'image thermique de sortie corrigée au moyen d'une table de couleurs ajustée à la caractéristique et enregistrée.

Fig. 1

Aufnahme eines
pixelbasierten
Wärmebildframes

Wärmebildframes (unbearbeitet)

Untergrundkorrektur
"Non Uniformity Correction"
des Wärmebildframes

Wärmebildframes (korrigiert)

Gewichtung der Pixelsignale
mit der nichtlinearen Kennlinie

Eingabe und Speicherung der
nichtlinearen Kennlinie

Korrigiertes
Ausgabewärmebild

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69830731 T2

- US 5083204 A